(19) Europäisches Patentamt
European Patent Office
Office européen des brevets

(11) **EP 2 881 707 A1**

(12) **EUROPEAN PATENT APPLICATION**

(43) Date of publication:
**10.06.2015 Bulletin 2015/24**

(51) Int Cl.:
**G01C 21/20** (2006.01)  **G06N 7/00** (2006.01)
**G01C 21/34** (2006.01)  **H04W 4/22** (2009.01)
**G01C 21/00** (2006.01)

(21) Application number: **13005725.0**

(22) Date of filing: **09.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ETH Zurich
8092 Zurich (CH)**

(72) Inventors:
• **Lygeros, John**
  **8044 Zürich (CH)**
• **Wood, Tony**
  **4105 Biel-Benken (CH)**
• **Summers, Sean**
  **8001 Zürich (CH)**
• **Kamgarpour, Maryam**
  **8037 Zürich (CH)**

(54) **Support to emergency evacuation**

(57)    A method for determining instructions for navigating a human in an emergency, includes detecting an initial position of the human, detecting an initial position of a hazard causing the emergency, maintaining a probabilistic model for a propagation of the hazard, maintaining a probabilistic model for a motion of the human, determining instructions for the human to move from the present position to a target space assumed to be safe for the human in view of the hazard dependent on at least the initial position of the hazard, the initial position of the human, the probabilistic model for the hazard, the probabilistic model for the human, and the target space, and transmitting the instructions to the human.

FIG. 1

EP 2 881 707 A1

**Description**

Technical Field

The invention is related to method, a computer system, a system and a computer program product for determining instructions for navigating a human in an emergency.

Background Art

Human navigation in emergency situations is a crucial problem. It arises in a large variety of environments from urban buildings to remote landscapes and with many different forms of life threatening hazards such as fire, toxic contamination or epidemics. Commonly, static evacuation routes are used to support humans in emergencies.

Disclosure of the Invention

The problem to be solved by the present invention is therefore to improve the support to humans in an emergency. **[0004]** This problem is solved by a method for determining instructions for navigating a human or many humans in an emergency, wherein an initial position of the human is detected, e.g. measured by a sensor, or otherwise estimated, as well as an initial position of a hazard causing the emergency, e.g. measured by a sensor, or otherwise estimated. A probabilistic model is maintained for a propagation of the hazard, such as dynamical model of a contamination propagation, as well as a probabilistic model for a motion of the human. Dependent on at least the initial position of the hazard, the initial position of the human, the probabilistic model of the hazard, the probabilistic model of the human, and a target space for the human assumed to be safe in view of the hazard, instructions are determined for the human to move from the initial position to the target space. The instructions are transmitted to the human. Preferably, the method is fully automated, and preferably in a system comprising next to a computer system for the determination step an output device preferably worn by the human to transmit the instructions to. The output device may preferably be a portable electronic device, such as a mobile phone, a wearable computer, or intelligent glasses or an intelligent watch.

Generally, the term emergency is to be interpreted broad such that potential emergencies, such as navigating a human through a packed store may also be captured.

In the present approach to emergency support and / or evacuation, stochastic models explicitly capturing uncertainties in the emergency scenario are considered in an adaptive route planning. A temporal development of an emergency scenario is highly complex and uncertain. The uncertainties may arise in all elements of this emergency scenario including humans and their hazardous surroundings and can be caused by any thinkable source, e.g. human reaction, measurement noise etc. These elements are therefore best modelled as stochastic processes. Any kind of detailed model of a probabilistic dynamic evolution may be included. Preferably, various stochastic models subject to the element to be modelled are combined and / or integrated.

A hazard that may be modelled according embodiments of the present invention is one or more of the following non-exhaustive list:

- fire;
- smoke;
- toxic gas;
- water leak;
- floods;
- other individuals or groups of humans, controlled or uncontrolled including dangerous individuals or groups;
- structural damage and / or weakness such as cracks, unsafe walls and stairs, live wires, etc;
- emergency reaction system such a water sprinkler, a locked door, etc.

In a preferred embodiment, a combination of two or more hazards may be modelled by aggregating and / or superimposing multiple probabilistic hazard models.

What is typical to a hazard is that it propagates over time. Hence, the present probabilistic model for the hazard reflects propagation thereof. For example, in case the hazard is a fire in a building, the danger from which the human shall escape can be considered as a spreading hazardous contamination.

The human is also modeled in its reaction to a set of instructions that may be given to the human. The set of instructions, later on also referred to as control set A, may include instructions that are transmitted to the human via one or more of the output devices that should impact the movements of the human in order to escape form the hazard, or fulfil a different task in the emergency. The set may include the instructions stay where you are, move in a first direction, e.g. north, move in a second direction, e.g. south, move in a third direction, e.g. east, move in a fourth direction, e.g.

west. In a preferred embodiment, the human model may then include probabilities for the position the human may take in a next time step, based on the present position and the current instruction, for example.

The instructions, the sequence of which in an emergency is also referred to as policy, may also depend on a navigation task defined. For example, a first navigation task may suggest a route to the human by means of the instructions to escape from a hazard causing the emergency, such that the human or a group of humans that may be or are endangered by a spreading contamination of the hazard such as a fire or smoke, e.g in a building which building in this example, may be the environment of the hazard and the human/s. However, a different navigation task may, for instance, include a search and rescue operation for injured people in a dangerous terrain, or include an area evacuation due to a natural disaster, or include a chemical or nuclear contamination, or include an act of war, etc.

Hence, the present idea exploits probabilistic prediction models of the dynamics of the hazard as well as the human exposed to the hazard to make intelligent decisions for planning a route, which route in case of the navigation task being an evacuation of the human is an evacuation route. It is preferred that feedback control is applied for adaptive route-generation in real-time. The instructions computed are a function of the state of a position of the human. The instructions, and as a result the route may be adapted in case of updated positions of the human and / or the hazard, or in view of the human not following the instructions given. The adaptation preferably is implemented in real time which is defined as being fast enough in order to enable the human to react in the order of few seconds which may be the time scale to react in emergencies. By means of the instructions, a navigation strategy can be produced for a human that optimizes the predicted success rate of the considered task. Furthermore, a value for the predicted success rate may be obtained which for quantifying and tracking how dangerous the current situation is.

Hence, in an embodiment of the present invention, feedback control and statistical analysis is applied, as well as adaptive route generation for emergency tasks, such as evacuation or search and rescue, in dynamic uncertain environments. In a very preferred embodiment, real-time measurements are taken as to a present position of the human and the hazard a based on the probabilistic models decisions are made by optimising the predicted success rate of a given task. In addition, preferably the environment is modelled, too, e.g. in form of a map. Hence, in an era of smart networking, mobile computing and sensing the presented sophisticated technique may assist humans in life threatening situations. There is a substantial benefit in making decisions and providing instructions in real-time. The possibility of adapting navigation strategies to an occurring situation increases the chances of successful navigation. Subsequently, this means an increase of the survival rate in safety critical situations.

In a preferred embodiment, after having already issued instructions to the human, i.e. the computer system being in operational mode, a present position of the hazard is detected, e.g. sensed by some sensor or otherwise estimated, such that the probabilistic model for the hazard can be determined from new or be adapted, which may also result in a modification to the present or any future instruction to be given to the human.

In the same way, after having already issued instructions to the human, i.e. the computer system being in operational mode, a present position of the hazard is detected, e.g. sensed by some sensor or otherwise estimated, such that the probabilistic model for the human can be determined from new or be adapted, which may also result in a modification to the present or any future instruction to be given to the human.

It is preferred, that the information related to the environment is incorporated into the model of the human and / or the hazard. For example, obstacles in the environment to the human and / or the hazard may be reflected in the models.

Preferably, a time interval is defined within which time interval the human is desired to be routed to the target space. The instructions are determined according to a maximized probability that the target space is reached within the time interval while avoiding the situation where the human is at a position where a hazard is present at that time for all times prior to reaching the target set.

In a preferred embodiment, the route is determined recursively based on combining for each point in time a previously calculated probability that no hazard was encountered so far with a probability that the one or more tasks will successfully be fulfilled in the future time steps.

In a preferred embodiment, policy elements in form of instructions are generated for guiding a human on a route from an initial location at an approximate point in time to a position that was previously defined as safe from one or more hazards. The route is an area or space that can be two or three dimensional, that can contain obstacles and in which one or more hazards dynamically appearing and/or propagating are detected, which the chosen route shall avoid. The hazard or hazards are modeled as probabilistic processes. A route is chosen for which the probability is maximized that a position safe from the hazard or hazards is reached within a given time while minimizing the probability that the policy of the route ever proposes to be at a position where an obstacle or hazard is present at the same time.

In a preferred embodiment, the movement from one position to the next position according to the policy of the route is also modeled as a probabilistic process.

According to another embodiment, the route is updated according to measurements of the propagation of the hazard or the hazards, according to measurements of the actual position of the human on the route or according to both.

According to a further embodiment, the optimization of the probabilities is carried out by a recursion or a similar process.

According to another embodiment, a technique across discrete points in time is applied, whereas for each point in time the previously calculated probability that no hazard was encountered by the route is combined with the probability that no hazard will be encountered at the next step for a particular option that is available without encountering an obstacle.

According to another embodiment, that a hazard is representing crowds or crowded confined spaces that are inferred recursively from policy elements of several routes that prescribe to be at identical or proximate locations at a given point in time.

According to an embodiment, a particular location is put onto the route, either as an endpoint or as an intermediate point, which is of particular interest, such as, but not limited to, a location where other individuals or goods to recover are located.

According to another embodiment, from a multitude of several location points of interest on the route a single or a set of particular points of interest is chosen according to a probabilistic optimization, such as, but not limited to, the points that can be reached with the minimal probability of encountering a hazard, or the points that have to be reached in the shortest time in order for the probability to encounter a hazard to stay under a certain threshold.

The described embodiments similarly pertain to the method, the system, the computer program product, and the computer system. Synergetic effects may arise from different combinations of the embodiments although they might not be described in detail.

Further on it shall be noted that all embodiments of the present invention concerning a method might be carried out in the order of the steps as described or in any other order if applicable. The disclosure and scope of the invention shall include any order of steps irrespective of the order listed in the claims.

Other advantageous embodiments are listed in the dependent claims as well as in the description below.

Brief Description of the Drawings

The embodiments defined above and further embodiments, features and advantages of the present invention can also be derived from the examples to be described hereinafter and are explained with reference to the annexed drawings, wherein:

FIG. 1 illustrates a block diagram of a computer system according to an embodiment of the present invention;
FIG. 2 illustrates a block diagram of a system according to an embodiment of the present invention;
FIG. 3 illustrates a sample building map $\Pi$ and a sample exit map $\Gamma$ as may be used in an embodiment of the present invention;
FIG. 4 illustrates a sample emergency scenario ; and

FIG. 5 shows in the same building map $\Pi$ the resulting optimal value function $V_0^*(x)$ for the emergency scenario given in FIG. 4.

Modes for Carrying Out the Invention

In the context of determining instructions for navigating a human in an emergency, it is preferred to initially define a navigation task. Considering a hazard in a building as emergency scenario, such as a fire or smoke, a navigation task may be, for example: Provide a route for a human in the building to reach a safe location outside the building while avoiding contact with the spreading fire and / or smoke. A navigation task for rescuers recovering injured humans in the same scenario may, for example, be formulated different: First reach an injured human and then reach a safe location outside the building while avoiding the hazard. These are just two examples of many possible safety critical navigation tasks. A task can also be updated or amended during operation of the proposed system dependent on a new resulting assessment of the scenario safety, for example. In search and rescue operations, for instance, there are often many different tasks in parallel. By comparing predicted success rates of individual tasks a prioritization can be taken between these tasks.

In one embodiment, the task is formulated as a probabilistic reach-avoid problem based on the theory of stochastic reachability for a discrete time stochastic hybrid system (DTSHS) with random sets. Preferably, the reach-avoid probability objective is maximized by solving a dynamic program. The reach-avoid problem generally is defined as the task of reaching a target space while avoiding the hazard while getting there. The discrete time stochastic hybrid system with random sets includes at least a probabilistic model for a propagation of the hazard, and a probabilistic model for a motion of the human.

Making use of a stochastic system adds some crucial benefits compared to deterministic models. Applying deterministic models to make decisions for an uncertain system leads to solutions that are either conservative or optimistic. In the conservative formulation the worst cases of all possible uncertainties are considered and it could be that no feasible route is found even though there exist strategies that with high probability would give good guidance. In an optimistic case only a subset of uncertainties is accounted for and the resulting route could potentially be dangerous. By applying a stochastic model for each of the hazard and the human, a dangerousness of various possible strategies can be assessed. This can be particularly important if multiple decisions need to be made and prioritized.

In a preferred embodiment, at least one of the probabilistic models for the human and the hazard are implemented as discrete time Markov chains. The two Markov chains representing the hazard and the human are preferably coupled. Preferably, the Markov chains are implicitly coupled via a decision making of the human in response to the instructions provided to the human. While the one or more hazards are uncontrolled the human behavior is subject to the decision the computer system makes and communicates to the human in from of an instruction in order to guide the human on a route that has the highest probability for success in view of the navigation task. The instructions and the underlying decision of the computer system preferably depend on the state of both probabilistic models, i.e. in the present embodiment of both Markov chains for the hazard as well as for the human.

In a preferred embodiment, the probabilistic model of the motion of a human in an emergency scenario is dependent on the age of the human. Here, different movement patterns may be implemented in the model for young, adult, and old human. Models for different humans may be aggregated and interfering effects may be modeled. In another embodiment, the probabilistic model can consider an uncertainty in measurements - which will be referred to further below - an uncertainty in the physical condition of a human and / or an uncertainty in reaction of humans to instructions, such as

- ■ Trust in system
- ■ Reaction time
- ■ Crowd dynamics
- ■ Following other humans
- ■ Prior knowledge of environment
- ■ Etc.

In a preferred embodiment, the probabilistic model of the propagation of a hazard may be different for different hazards and as such respect the characteristics e.g. in propagation of each hazard. A hazard may include one of fire, smoke, toxic gas, structural damage, flood and may be modelled or reversely identified by matching measurements to probabilistic models. Models for different hazards may be aggregated and interfering effects may be modeled. Uncertainty in the dynamics of the hazard, such as, but not limited to a diffusion speed.

Information as to an environment of the one or more humans and the one or more hazards may in a preferred embodiment be provided, e.g. in form of a map. The map may be a map of a building to be evacuated in case the emergency scenario refers to the evacuation or the search and rescue of a building, or the map of an open terrain in case this shall be the environment of an emergency. Such map may preferably include obstacles, wherein the obstacles may in one embodiment be distinguished in obstacles for the human and obstacles for the hazard. Such map can be considered as an auxiliary object used to describe the dynamics of the human and the hazard.

The environmental information may in one embodiment impact the probabilistic models of the human and / or the hazard. For example, in the probabilistic model of the human, a non-conquerable wall in the close vicinity of the human may inhibit the human to move through / in direction to the wall such that a human movement in this direction may upfront be excluded, or if not excluded assigned at least a little probability.

Any information as to the environment may also be dynamic in time and may be subject to updates during operation of the system. In case the environment changes over time, the corresponding map may be updated during operation of the system and by doing so, the evolutions of the two Markov chains may be coupled explicitly via the map. In this embodiment, the map is variable over time. In one embodiment, amendments to the structure of the environment can be detected by suitable measurements taken by sensors. In another embodiment, the map can also be modelled as a stochastic process in which a structural change in the map may e.g. occur at a certain probability.

In a preferred embodiment, the probabilistic models for the human and the hazard are explicitly coupled by the map. Hence, the models of the individual elements of the system, i.e. humans, hazards and the surroundings are potentially interlinked.

Given that the latter approach may potentially increase the computational complexity, it may in an alternative way be preferred to model a structural change in the environment as a hazard and superimpose this hazard to the one or more further hazard models.

In a very preferred embodiment of the method and the system, measurements are taken. The measurements allow to derive one or more of the position of the human and the propagation of the hazard. Hence, present conditions of the human and the dangerous hazard may be observed by smart sensing and / or estimation in real-time. The route or the instructions representing this route may then be adapted based on an optimization procedure, which maximizes the predicted probability of success.

In a preferred embodiment a present position of the human and / or the hazard, which represents an update to a previous position may be taken into account and amend the probabilistic models in that possibly in view of the present position a new route is to be suggested and hence modified instructions are to be communicated to the human.

Under the assumption, that the determination of the instructions are implemented on some kind of computer system, an update of the present position of the hazard and / or the human may lead to a modified set of instructions the process of determining such modified set may be interpreted as an optimization. The optimization may be repeated in real-time with updated information from one or more sensors capable of providing position information with respect to the human and / or the hazard such that an evolution of the scenario is taken into account.

In a preferred embodiment, the instructions are communicated to the one or more human/s, e.g. by one or more mobile and / or stationary devices connected to the computer system the route determination runs on. The communication can be directed to an individual or a group of humans. Preferably, the observation which is the measurement of the present conditions of the human and the hazard, the optimization which is the re-evaluation of the suggested instructions representing the best route for fulfilling the given task, and the actuation which is the communication of the determined instructions to the one or more humans are repeated until the task is completed.

In this respect, and in a very preferred embodiment, mobile or wearable computers with wireless communication capability such as tablet computers and in particular mobile phones such as smart phones may support the route determination process in both ways: A sensor of a smart phone, such as a GPS sensor may in one embodiment sense the present position of the human to the computer system. At the same time the mobile phone may act as output device for the instructions to take the recommended route, which instructions may be sent to the mobile phone e.g. via a message such as an SMS, by automated phone calls, by instant messaging etc. In other embodiments, such mobile phone may also act as a sensor for sensing a present position of the hazard, which sensor may include e.g. a mobile phone camera in combination with the GPS.

In another embodiment, different communication channels may be used in parallel to communicate the optimal route, or the instructions respectively. In another embodiment, the output device may include one or more stationary signs affecting groups of humans over a set of positions.

Specifically, when actual information sensed with respect to the propagation of the hazard and / or the movement of the human are taken into account, routes and the corresponding instructions may be dynamically adapted and / or optimized in order to enhance safety.

Preferably, the optimization procedure incorporates a collection of hazard and human models and takes uncertainty arising from the condition of the humans, the type of hazards, and the quality of the measurement and actuation system into account.

Overall, human safety may significantly be increased in emergency situations by means of adaptively generating routes for safety critical tasks in complex uncertain environments which finally can help save lives. Furthermore the developed techniques can help identify safety risks in complex situations.

In an embodiment of the present invention, a task in an emergency scenario is formulated as a probabilistic reach-avoid problem based on the theory of stochastic reachability for a discrete time stochastic hybrid system with random sets. Preferably, the reach-avoid probability objective is maximized by solving a dynamic program. Solving the dynamic program results in an optimal control policy for the human and a value for the maximal probability for escape for all positions in the emergency scenario.

The discrete time stochastic hybrid system may preferably be described by a Markov control process, i.e. a Markov chain $H=f(X, A, Q)$ with a state space X, a control space A, and a controlled transition probability function Q. Given a Markov control policy $\mu \in M_m$ where $M_m$ denotes the set of all admissible Markov control policies and initial state $x_0 \in X$, the execution $\{x_k; k = 0; ... ;N\}$ is a time inhomogeneous stochastic process defined on the canonical sample space $Q = X^{N+1}$ endowed with its product $\sigma$-algebra $B(\Omega)$ where $B(.)$ denotes the Borel $\sigma$-algebra. The probability measure $P_{x_0}^{\mu}$ is uniquely defined by the transition kernel Q, the Markov policy $\mu \in M_m$, and the initial condition $x_0 \in X$. For k = 0; 1; 2; ... ,N let $G_k$ be a Borel-measurable stochastic kernel on $\underline{y}'$ given $G_k : B\left(\underline{y}'\right) \times \underline{y}' \to [0,1]$ which assigns to each $Y \in \underline{y}'$ a probability measure $G_k(.|\xi)$ on the Borel space ($\underline{y}'$ ; $B\left(\underline{y}'\right)$ ). That is, let $G_k$ represent a collection of probability measures on ($\underline{y}'$ ; $B\left(\underline{y}'\right)$ ) parameterized by the elements of $\underline{y}'$ and indexed by time k. A discrete-time time-inhomogeneous Markov process $\xi=(\xi)_{k \in N_0}$ taking values in the Borel space $\underline{y}'$ is described by the stochastic kernel $G_k$.

A parametrization of a discrete-time set-valued stochastic process is a discrete-time Markov process $\xi=(\xi_k)_{k \in N_0}$ with parameter space y and transition probability function $G_k : B\left(\underline{y}'\right) \times \underline{y}' \to [0,1]$ together with a function $\gamma := \underline{y}'$

$\to$B$\left(\mathcal{Y}'\right)$ representing a stochastic (Borel) set-valued evolution on the hybrid state space X according to the process $\xi$. Consequently, it holds that there exists a Borel set $\overline{K} \in B(X \times \gamma)$ defined $\overline{K} = \{x,) \in X \times \gamma | x \in \gamma(\xi)\}$. For all $x \in X$, $\xi_{k-1} \in \mathcal{Y}'$, and $k \in N$, preferably the following 'covering' function is defined:

$$p_{\gamma(\xi_k))}(x) = \mathbf{P}_{\xi_{k-1}}\{x \in \gamma(\xi_k)\}$$

For all $x \in X$ and all $\xi_{k-1} \in \mathcal{Y}'$, it follows that the above covering function is Borel measurable and bounded between 0 and 1. Now the set valued maps $\gamma_1 : \mathcal{Y}' \to B\left(\mathcal{Y}'\right)$ and $\gamma_2 : \mathcal{Y}' \to B\left(\mathcal{Y}'\right)$ where, for all $\xi \in \mathcal{Y}'$, $\gamma_1(\xi) \subseteq \gamma_2(\xi)$ almost surely. It follows that

$$p_{\gamma_2(\xi_k)\setminus\gamma_1(\xi_k)}(x) = p_{\gamma_2(\xi_k)}(x) - p_{\gamma_1(\xi_k)}(x)$$

Let $K_k$, $K_k' \in B(X)$, with $K_k \subseteq K_k'$ for all $k = 0, 1, \ldots N$. Now, the goal is to evaluate the probability that the execution of the Markov control process associated with the Markov policy $\mu \in M_m$ and the initial condition $x_0$ will hit $K_k$ before hitting $X \setminus K_k'$ during the time horizon N. Let $\xi=(\xi_k)_{k \in N_0}$ with stochastic kernel $G_k : B\left(\mathcal{Y}'\right) \times \mathcal{Y}' \to [0,1]$ together with the functions $\gamma_1 : \mathcal{Y}' \to B\left(\mathcal{Y}'\right)$ and $\gamma_2 : \mathcal{Y}' \to B\left(\mathcal{Y}'\right)$ be a parametrisation of a discrete-time set-valued stochastic process. It is assumed that the initial set parameter state $\xi_0$ is known, hence $\gamma_1(\xi k)=K_k$ and $\gamma_2(\xi k)=K_k'$ for $k = 1, \ldots N$ is an execution of the stochastic set-valued process. The probability that the system initialised at $x_0 \in X$, with control policy $\mu \in M_m$ and $\xi \in \mathcal{Y}'$, reaches $K_k$ while avoiding $X \setminus K_k'$ for all $k = 0,1 \ldots N$ is given by

$$r^{\mu}_{(x_0,\xi_0)} := P^{\mu}_{(x_0,\xi_0)}\{\exists j \in [0,N] : x_j \in K_j \wedge \forall i \in [0, j-1]x_i \in K_i'K_i\}$$

where $_\wedge$ denotes a logical AND. It is assumed that the requirement on i is automatically satisfied when $x_0 \in$ Ko. Subsequently a similar convention may be used for products, i.e.

$$\prod_{i=k}^{j}(.) = 1 \quad \texttt{if} \quad \texttt{k} \; > \; \texttt{j}.$$

Note that while knowledge of the initial state and initial set parameter is assumed, a probabilistic initial condition for each may also be considered and shall be included.

$$\sum_{j=0}^{N}\left(\prod_{i=0}^{j-1}1_{K_i'/K_i}(x_i)\right)1_{K_j}(x_j) = \begin{cases} 1 \, if \exists j \in [0,1] : x_j \in K_j \wedge \forall i \in [0, j-1]x_i \in K_i'/K_i \\ 0, otherwise \end{cases}$$

where $1_A$ denotes the indicator function of set $A \subseteq X$. Hence $r^\mu_{(x_0, \xi_0)}$ can be expressed as the expectation

$$r^\mu_{(x_0, \xi_0)} = \mathrm{E}^\mu_{(x_0, \xi_0)} \left[ \sum_{j=0}^{N} \left( \prod_{i=0}^{j-1} 1_{K'_i \backslash K_i}(x_i) \right) 1_{K_j}(x_j) \right]$$

It is further $N \in \mathbb{N}$ assumed that the product measure of the parametric process is equal to or well approximated by the product measure of time indexed independent stochastic kernels, i.e. for

$$\prod_{j=0}^{N} G_j(\,d\xi_j | \xi_{j-1}) \approx \prod_{j=0}^{N} G_j(\,d\xi_j)$$

The initial parameter state $\xi_0$ of the random set is assumed to be known, such that it is defined

$$G_0(d\xi_0 \mid \xi_{0-1}) = G_0(d\xi_0) = \delta_{\xi_0}(d\xi_0)$$

For a DTSHS with independent set-valued reach and safe sets $\gamma_1(\xi_k) \subseteq \gamma_2(\xi_k)$ almost surely it can be shown that

$$r^\mu_{(x_0, \xi_0)} = E^\mu_{x_0} [\sum_{j=0}^{j-1} (\prod_{i=0}^{j-1} p_{K'_i K_i}(x_i)) p_{K_j}(x_j)]$$

with the covering functions being

$$p_{K_i}(x) = E[1_{\gamma_1(\xi_i)}(x)] = \int_\gamma 1_{\gamma_1(\xi_i)}(x) G_i(d\xi_i)$$

$$p_{K_i'}(x) = E[1_{\gamma_2(\xi_i)}(x)] = \int_\gamma 1_{\gamma_2(\xi_i)}(x) G_i(d\xi_i)$$

$$p_{K_i'/K_i}(x) = p_{K_i'}(x) - p_{K_i}(x)$$

Let F denote the set of functions from X to R and define the operator H : X x A x F → R as

$$H(x, a, Z) := \int_X Z(y) Q(\,dy | x, a)$$

In a preferred embodiment, $r^{\mu}_{(x_0,\xi_0)}$ can be computed via backwards recursion. For a Markov policy $\mu=(\mu_0,\mu_1,...\mu_{N-1})\in M_m$ the functions $V^{\mu}_k : X \rightarrow [0,1]$, k=0, 1, ...N can be computed by backwards recursion

$$V^{\mu}_k(x) = p_{K_k}(x) + p_{K'_k \setminus K_k}(x) H\left(x, \mu_k(x), V^{\mu}_{k+1}\right)$$

initialized with $V^{\mu}_k(x) = p_{K_N}(x)$ with $x \in X$.

With respect to the Maximal Reach-Avoid Policy, let H be a Markov control process, $\xi=(\xi_k)_{k\in N_0}$ a parametric stochastic process, $K_k \in B(X)$, $K_k' \in B(X)$, with $K_k \subseteq K_k$ almost surely and $K_k=\gamma_1(\xi_k)$ and $K_k'=\gamma_2(\xi_k)$ for all k = 0, 1, ... N. A Markov policy $\mu^*$ is a maximal reach-avoid policy if and only if

$$r^{\mu^*}_{(x_0,\xi_0)} = \sup_{\mu\in\mathcal{M}_m} r^{\mu}_{(x_0,\xi_0)}$$

for all $x_0 \in X$.

When $V^*_k : X \rightarrow [0,1]$, k=0, 1, ...N is defined by backwards recursion

$$V^*_k(x) = \sup_{a\in\mathcal{A}} \left\{ p_{K_k}(x) + p_{K'_k \setminus K_k}(x) H\left(x, a, V^*_{k+1}\right) \right\}$$

$x \in X$, initialized with $V^*_N(x) = p_{K_N}(x)$, $x \in X$. Then

$$V^*_0(x_0) = \sup_{\mu\in M_m} r^{\mu}_{(x_0,\xi_0)}$$

$X_0 \in X$ and $\xi_0 \in \mathcal{Y}$. If $\mu^*_k : X \rightarrow A$, k $\in$ [0,N-1] is such that for all x $\in$ X

$$\mu^*_k(x) = \arg\sup_{a\in\mathcal{A}} \left\{ p_{K_k}(x) + p_{K'_k \setminus K_k}(x) H\left(x, a, V^*_{k+1}\right) \right\}$$

then $\mu=(\mu_0,\mu_1, ...,\mu_{N-1})$ is a maximal reach-avoid policy.

In the following, an embodiment is presented for providing instructions for a human to escape from a building in an emergency scenario such as fire or smoke as hazard. In this embodiment, the emergency scenario is considered to be a hazard spreading in a building which threatens the safety of a single human in the building. It is desired to obtain a control strategy for this human to guide through an evacuation route to the outside of the building. For illustration purposes, no interaction is assumed with other humans possibly in the building, e.g. no crowd dynamics are considered.

The hazard may be modelled by a diffusion process. From now on, it will be referred to the hazard as fire while other type of hazards may be addressed, too, in addition or instead.

In a preferred embodiment, a map of the environment in this emergency scenario is given which specifically may be a map oft the building. In a preferred embodiment, a position of the human may be detected at any given time as may be the position of the fire. For illustration purposes, a two-dimensional approach is taken such that e.g. a one story building is represented by a two-dimensional binary building map $\Pi$ that may be described by $\Pi = R^2 \rightarrow \{0,1\}$ and indicate whether a position $p \in R^2$ is free space ($\Pi(p)=0$) or is an obstacle ($\Pi(p)=1$) to the human, e.g. a wall. In addition, a binary exit map $\Gamma$ may be provided with $\Gamma : R^2 \rightarrow \{0,1\}$. The exit map $\Gamma$ indicates whether a position $p \in R^2$ is inside the building ($\Gamma(p)=0$) or outside ($\Gamma(p)=1$) the building.

Probabilistic models are applied to predict the uncertain evolution of each the fire and the human. The task defined is to find a control strategy for the human, i.e. a sequence of instructions also referred to as policy, that maximises the probability of escaping the building while avoiding contact with the spreading fire within a certain time horizon.

The task is formulated as a finite horizon stochastic reach-avoid problem: An unsafe set is the set of all positions contaminated by the fire. A target set is the set of all positions outside the building. The unsafe set is stochastic and dynamic while the target set is static.

In a preferred embodiment, a probabilistic model for the motion of a human may be based on a state space in form of a discrete grid of positions in space that are accessible by a human. The space as is the grid may either be two-dimensional or three-dimensional, while in this embodiment it is two-dimensional. The state space X generally covers the spatial or plane space the emergency scenario occurs in. In the present example, the two-dimensional state space X virtually divided into a grid containing cells next to each other in the two dimensions, wherein except for cells at the edges of the state space X each cell has four direct neighbors, i.e. the cells adjacent to each of the four cardinal directions, and four more diagonal neighbors, i.e. the cells that are diagonally arranged with respect to the cell. Under the assumption that a discrete time model is applied, the human may in a subsequent time step stay at the position / cell where he / she is, or may move from a present position / cell to one of the direct neighbor cell, or to one of the diagonal neighbor cells, always provided those are free cells. A free cell is considered to be a cell not occupied by an obstacle according to the building map $\Pi$.

In a preferred embodiment, information related to the specific emergency environment may be considered in the probabilistic model of the motion of the human. For example, the above building map $\Pi$ may reflect positions occupied by walls or other obstacles such that some of the cells of the state space X are blocked cells, and others are free cells.

In the following, the probability of the human moving to a direct free neighbor cell shall be $p_h$. The probability of the human moving to a diagonal free neighbor cell shall be $(1/\sqrt{2})p_h$. A target cell only in this context is defined as a free cell of the state space X that the human is expected to take, or in other words, the human is instructed to take in order to fulfil the task. The target cell may be the cell the human presently resides or one of its direct or diagonal neighbor cells. The probability to stay at / move to the target cell in the next time step is one minus the probability of going to any of the free neighbour cells. Hence, the tuning parameter $p_h$ determines how likely the human will ignore an instruction of the system and move to a cell different than the target cell. The smaller $p_h$ is, the less noisy the model of the human is if the human is not under motion.

The above embodiment of a probablilistic model of the motion of a human in an emergency scenario may in one embodiment be implemented as a finite state Markov Decision Process (MDP) as follows: The human is a discrete time finite MDP state I = (X;A;Q).

X denotes a discrete state space X which is a finite set of valid positions the human can be in. In a two dimensional state space x,y in form of a grid as introduced above, the position $h_x$, $h_y$ of the human may be characterized by

$$h_x \in H_x := \{H_{x,1}, H_{x,2}, ..., H_{x,m}\}$$

$$h_y \in H_y := \{H_{y,1}, H_{y,2}, ..., H_{y,n}\}$$

with m, n $\in$ N defining an extension of the state space X in x- and y-direction with m x n grid cells. The state space X is spanned by the grid cells $H_x$ and $H_y$ as follows:

```
Hx,i+1 = Hx,i + ΔH; for i = 1; 2; … ;m-1,
```

$$H_{y;j+1} = H_{y,j} + \Delta H; \text{ for } j = 1; 2; \dots ;n-1$$

with $\Delta H$; $H_{x,1}$; $H_{y,1} \in R$. In the present example, i and j denote discrete spatial steps. A combination $(h_x; h_y) \in H_x \times H_y$ is in X if the corresponding position is not an obstacle in the predefined building map $\Pi = R^2 \rightarrow \{1,0\}$. In the building map $\Pi$, a cell has a value 0 if it is a free cell, i.e. a human can stay in or go to, and has a value 1 if the cell is not a free cell, e.g. if it represents an obstacle such as a wall. Based on the building map $\Pi$, the discrete planar state space X of valid positions the human can take is defined in dependency of the building map $\Pi$ to include all cells $h_x$, $h_y$ where the building map does not show any obstacle:

$$X := \{(h_x; h_y) \in (H_x;H_y) \mid \Pi(h_x; h_y) = 0\} \subset R^2$$

A denotes a sample control set, i.e. the set of instructions:

$$A := \{0;N;E;S;W\}$$

wherein the control set A in the present embodiment contains individual control inputs a, i.e. instructions:

0: stay at the current position,
N: go one step in positive $h_y$-direction,
E: go one step in positive $h_x$-direction,
S: go one step in negative $h_y$-direction,
W: go one step in negative $h_x$-direction.

The control inputs refer to advice / recommendations, the system provides to the human where to head for.
Q refers to state transitions:

$$Q : B(X) \times X \times A \rightarrow [0,1]$$

which state transitions Q are defined by:

$$Q(x'\mid x,0) := \begin{cases} T(x) & \text{if } x' = x \\ p_h & \text{if } |h_x' - h_x| + |h_y' - h_y| = \Delta H \\ \dfrac{p_h}{\sqrt{2}} & \text{if } |h_x' - h_x| = \Delta H \text{ AND } |h_y' - h_y| = \Delta H \end{cases}$$

In this notation x'|x refers to a transition of the human from a position x at a given point in time to a position x' in a subsequent point in time, e.g. in the next time step in case the time base is discrete. Note that here x refers to a two-dimensional position of the human rather than to the bare x-axis co-defining the position x. The expression Q(x'|x,0) hence refers to the probability of the human presently taking position x for taking position x' in a next time step in view of a control input of a=0 which advises the human to stay where he/she is. Hence, the probability of the human moving to one of the free direct neighbor cells although being advised to stay at the present cell x=x' is $p_h$. This move to a direct neighbor cell is mathematically defined by $|h_x'-h_x|+|h_y'-h_y|=\Delta H$. The probability of the human moving to one of the free diagonal neighbor cells although being advised to stay at the present cell x=x' is $(1/\sqrt{2})p_h$. This move to a diagonal neighbor cell is mathematically defined by $|h_x'-h_x|=\Delta H$ AND $|h_y'-h_y|=\Delta H$. The probability of the human staying where he/she is is referred to as T(x) which is calculated by one minus the probability of going to any of its free neighbour cells:

$$T(x) = 1 - \left( N_h(x) + \frac{D_h(x)}{\sqrt{2}} \right) p_h$$

$$N_h(x) := \left| \left\{ x' \in X \middle| |h_x'-h_x| + |h_y'-h_y| = \Delta H \right\} \right|$$

$$D_h(x) := \left| \left\{ x' \in X \middle| |h_x'-h_x| = \Delta H \wedge |h_y'-h_y| = \Delta H \right\} \right|$$

$$x' = (h_x', \ h_y'), \ x = (h_x, \ h_y) \in X, \ p_h \in \left[ 0, \frac{1}{4-2\sqrt{2}} \right]$$

wherein $N_h(x)$ defines the number of free direct neighbors and $D_h(x)$ defines the number of free diagonal neighbors.
While in the above expression for the state transition Q a control input a=0 was assumed, i.e. not to move, the probabilities for any of the other control inputs a=N, E, S, W can in particular be expressed by referring to the above expression for the control input a=0 as follows:

$$Q(x'|x,N) := \begin{cases} Q(x'|(h_x, h_y + \Delta H),0) & \text{if } (h_x, \ h_y + \Delta H) \in X \\ Q(x'|x,0) & \text{otherwise} \end{cases}$$

$$Q(x'|x,E) := \begin{cases} Q(x'|(h_x + \Delta H, h_y),0) & \text{if } (h_x + \Delta H, \ h_y) \in X \\ Q(x'|x,0) & \text{otherwise} \end{cases}$$

$$Q(x'|x,S) := \begin{cases} Q(x'|(h_x, h_y - \Delta H),0) & \text{if } (h_x, \ h_y - \Delta H) \in X \\ Q(x'|x,0) & \text{otherwise} \end{cases}$$

$$Q(x'|\ x,W) := \begin{cases} Q(x'|\ (h_x + \Delta H, h_y),0) & \text{if } (h_x + \Delta H,\ h_y) \in X \\ Q(x'|\ x,0) & \text{otherwise} \end{cases}$$

In a preferred embodiment, a probabilistic model for a hazard may be based on a state space $\mathcal{Y}$ in form of a discrete grid of positions in space that are reachable by the hazard. The state space $\mathcal{Y}$ may either be two-dimensional or three-dimensional, and in the present embodiment is two-dimensional. The state space $\mathcal{Y}$ may virtually be divided into a grid containing cells next to each other in the two dimensions, wherein except for cells at the edges of the state space $\mathcal{Y}$ each cell has four direct neighbors, i.e. the cells adjacent to each of the four cardinal directions, and four more diagonal neighbors, i.e. the cells that are diagonally arranged with respect to the cell. A cell of the state space $\mathcal{Y}$ may be occupied by the fire which is also referred to as a contaminated cell or may not be occupied which is also referred to as a non-contaminated cell.

In one embodiment, all cells of the state space $\mathcal{Y}$ may be cells that can be occupied by the fire. In a preferred embodiment, information related to the specific environment may be considered in the probabilistic model of the propagation of the fire. For example, the spatial state space $\mathcal{Y}$ may reflect positions occupied by obstacles that in case of a fire may be considered as cells containing fuel of first quality while cells of the building map $\Pi$ not containing obstacles may be considered as cells containing fuel of a second quality.

In contrast to the probabilistic model for the humans, the model for the hazard does typically not include a control given that it is charactersitic that a hazard propagates uncontrolled.

In a one embodiment, the state space $\mathcal{Y}$ =$\{0,1\}^{m \times n}$ which is different to the state space X for the humans contains cells that are accessible for the fire which cells are of value 0, or cells that are not accessible for the fire which cells are of value 1, which in the present context may, for example, be cells outside the building. Within this state space $\mathcal{Y}$ the fire may in a preferred embodiment be represented by a matrix $\xi$ with binary elements. Each element describes the condition of a cell with spatial coordinates (i,j) in the state space $\mathcal{Y}$. A cell (i,j) can either be contaminated by the hazard, i.e. $([\xi]_{i,j}=1)$ or not be contaminated $([\xi]_{i,j}=0)$.

For describing the propagation of the fire, in a preferred embodiment a general contamination diffusion model is introduced. As explained above, presently two types of fuels are considered for fuelling the fire, i.e. obstacles and free space. A dynamic behaviour of this fire propagation model is represented as a parametrised discrete-time set-valued stochastic Markov decision process (MDP) wherein the fire is a discrete time finite MDP state J = ( $\mathcal{Y}$ ;G).

$G_k(\xi'|\xi)$ refers to a transition probability from the hazard matrix $\xi$ to the hazard matrix $\xi'$ within a time step. For determining the transition probability $G_k(\xi'|\xi)$, in a preferred embodiment, it is assumed that a cell once contaminated remains contaminated for all future time steps. A probability that a non-contaminated cell (i;j) in the matrix $\xi$ gets contaminated in the next time step by a contaminated direct neighbor cell shall be $p_f$. The probability that the cell (i;j) gets contaminated in the next time step by a contaminated diagonal neighbor shall be $(1/\sqrt{2})p_f$. In the present embodiment, the value of $p_f$ depends on whether the considered cell (i;j) represents free space, then a probability of $p_0$ is assumed, or an obstacle, then a probablity of $p_1$ is assumed, and determines how fast the fire propagates. It is further assumed that the events of the cell (i,j) being contaminated by one of its neighbor cells in the next time step are independent. Under these assumptions, the probability $p_f$ that a non-contaminated cell (i;j) in the matrix $\xi$ becomes contaminated in the next time step by a contaminated direct neighbor cell is:

$$p_f(i,j) := \begin{cases} p_0, & \text{if } \Pi(H_{x,i}, H_{y,j}) = 0 \wedge \Gamma(H_{x,i}, H_{y,j}) = 0 \\ p_1, & \text{if } \Pi(H_{x,i}, H_{y,j}) = 1 \wedge \Gamma(H_{x,i}, H_{y,j}) = 0 \\ 0, & \text{if } \Gamma(H_{x,i}, H_{y,j}) = 1; \end{cases}$$

$\Pi$ again refers to the building map $\Pi$ as defined above. $\Gamma:R^2 \rightarrow \{0,1\}$ refers tot he exit map as defined above as well. The above probability $p_f$ for cell (i,j) is $p_0$ in case the cell (i,j) is inside the building ($\Gamma(H_{x,i},H_{y,j})=0$) and the cell (i,j) at the same time is free space ($\Pi(H_{x,i},H_{y,j})=0$), and is $p_1$ in case the cell (i,j) is inside the building ($\Gamma(H_{x,i},H_{y,j})=0$) and at the same time the cell (i,j) is an obstacle according to the building map ($\Pi(H_{x,i},H_{y,j})=0$). In case the cell (i,j) is outside the building ($\Pi(H_{x,i},H_{y,j})=0$), the probability $p_f$ is 0.

While $p_f$ denotes the probability for a contamination by one neigboring cell, it is desired to determine the probability $p_{nc}(i,j,\xi)$ for a cell not to be

$$p_{nc}(i,j,\xi) := \left(1 - p_f(i,j)\right)^{N_f(i,j,\xi)} \cdot \left(1 - \frac{p_f(i,j)}{\sqrt{2}}\right)^{D_f(i,j,\xi)}$$

contaminated (nc) in the next step by any of its neighboring cells, be it its direct or diagonal neighbors, including the possibility of already being contaminated, which is given by:

$N_f(i,j,\xi)$ defines the number of contaminated direct neighbors and $D_f(i,j,\xi)$ defines the number of contaminated diagonal neighbors, wherein an element in the

$$N_f(i,j,\xi) := [\xi]_{i,j+1} + [\xi]_{i+1,j} + [\xi]_{i,j-1} + [\xi]_{i-1,j},$$

$$D_f(i,j,\xi) := [\xi]_{i+1,j+1} + [\xi]_{i+1,j-1} + [\xi]_{i-1,j-1} + [\xi]_{i-1,j+1}$$

fire matrix $\xi_{i,j}$ being contaminated taking the value 1, and not being contaminated taking the value 0.

Having determined the probability $p_{nc}(i,j,\xi)$ for a cell not to be contaminated (nc) in the next step by any of its neighboring cells, it is further of interest to determine the transition probability $P_f([\xi]_{i,j}|\xi)$

$$P_f\left([\xi']_{i,j}\,\Big|\,\xi\right) := \begin{cases} p_{nc}(i,j,\xi), & \text{if } [\xi']_{i,j} = 0 \wedge [\xi]_{i,j} = 0 \\ 1 - p_{nc}(i,j,\xi), & \text{if } [\xi']_{i,j} = 1 \wedge [\xi]_{i,j} = 0 \\ 0, & \text{if } [\xi']_{i,j} = 0 \wedge [\xi]_{i,j} = 1 \\ 1, & \text{if } [\xi']_{i,j} = 1 \wedge [\xi]_{i,j} = 1 \end{cases}$$

for a cell (i,j) for different scenarios within a time step:

Accordingly, the transition probability is $p_{nc}(i,j,\xi)$ for the cell (i,j) presently not being contaminated ($[\xi]_{i,j}=0$) to remain non-contaminated ($[\xi']_{i,j}=0$) in the next time step. The transition probability is ($1-p_{nc}(i,j,\xi)$) for the cell (i,j) presently not being contaminated ($[\xi]_{i,j}=0$) to become contaminated ($[\xi']_{i,j}=1$) in the next time step. The transition probability is 0 for the cell (i,j) presently being contaminated ($[\xi]_{i,j}=1$) to become non-contaminated ($[\xi']_{i,j}=0$) as this excluded by definition, see above. Hence, a cell (i,j) being contaminated ($[\xi]_{i,j}=1$) is expected to remain contaminated ($[\xi']_{i,j}=1$) in any case.

While the above expression denotes the transition probability $P_f([\xi]_{i,j}|\xi)$ for a specific cell (i,j) for different scenarios, it is desired to determine this transition probability for all cells in the fire matrix, which transition probability $G_k(\xi'|\xi)$ for the fire matrix $\xi$ to convert into the fire matrix $\xi'$ in a next step is determined by:

$$G_k(\xi'|\xi) = \prod_{i=1}^{m}\prod_{j=1}^{n} P_f\left([\xi']_{i,j}\,\Big|\,\xi\right)$$

according to which the individual transition probabilities for each cell in the grid $n \times m$ are multiplied such that the result is a matrix $G_k(\xi'|\xi)$ indicating for each cell (i,j) therein a probability to be contaminated in the next time step. For all the

above formulas:

$$\xi', \xi \in \mathbb{Y};$$
$$p_0, p_1 \in [0,1];$$

$[\xi]_{i,j}$ is considered to be the element of the hazard matrix in the i-th row and the j-th column of $\xi \in \{0,1\}^{mXn}$ and is considered to be 0 if $i \notin [1, m]$ or $j \notin [1, n]$.

Having modeled the human and the fire, it is switched back to the task to be solved, i.e. in the present example:

$$r_{(x_0,\xi_0)}^{\mu} := P_{(x_0,\xi_0)}^{\mu} \{\exists j \in [0,N] : x_j \in K_j \wedge \forall i \in [0, j-1] x_i \in K_i' K_i\}$$

wherein

- r refers to the probability of success;
- $\mu$ refers to a strategy to be applied which is to be determined or is the object that can be manipulated;
- $x_j$ and $x_i$ each denote a position x of the human at a time i or j respectively;
- $x_0$ indicates an initial position of the human;
- $\xi$ refers to a position / an area of the hazard, e.g. the fire. In one example, $\xi$ may be represented by a matrix in which all positions contaminated by the hazard are valued 1 while all other positions are valued 0;
- $\xi_0$ indicates an initial position / an initial area of the hazard;
- P refers to the probability;
- N is the maximum time until which the human should have reached a target. 0 denotes the start time, such that the time interval [0,N] refers to a time interval, also referred to as time horizon, during which the task should be performed;

In the present example, it is assumed that the emergency scenario is relevant to a two-dimensional state space X, see above. Two sub-spaces may in one embodiment be defined within this state space X:

- a first subset Ki - also referred to as target space - shall include all targets for the human to optionally head for. Hence the target space includes positions x - which in the present building example is any position outside the building - which are considered as a safe target for the human;
- A second subset $K_i'$ - also referred to as safe space - includes all positions x in the space X that are safe including positions x in the target space and outside the target space, i.e. in the present building example also safe positions within the building. In a typical example, these are the positions x that are not contaminated by the hazard.

Note, that while in most embodiments, the target space may be static - while in some embodiments it may also change over time - the safe space preferably is dynamic and changes over time in view of the propagation of the hazard.

Hence, the above task denotes the probability r that there is at least one point in time j within the time interval N - expressed by $\exists$ j - at which the human is in the target space and - expressed by the value function V that is the success probability as a function of time, e.g. V=r at time 0 - that for all points in time i prior to the time j the human is in a the safe space outside the target space.

The above formula may be rewritten into:

$$r_{(x_0,\xi_0)}^{\mu} = E_{x_0}^{\mu} [\sum_{j=0}^{j-1} (\prod_{i=0}^{j-1} p_{K_i'K_i}(x_i)) p_{K_j}(x_j)]$$

wherein

- $E_{x_0}^{\mu}$ refers to the expectation for the following argument;
- $p_{Kj}(x_j)$ refers to the expectation that a position x of the human at time j is in the target space $K_j$;

- $p_{Ki'\backslash pKi}(x_i)$ refers to the expectation that a position x of the human at time i is in the safe space $K_i'$ but not (yet) the target Ki.

Hence, the expectation value is composed from the summation of probabilities over all possible times j that for the respective time j the human is in the target space Ki and that for all times i before time j the human is in a safe subset Ki' outside the target set Ki.

Now, the probability $p_{K_i}(x)$ that a position x of the human at time i is in the target space / set Ki is given by

$$p_{K_i}(x) = E[1_{\gamma_1(\xi_1)}(x)] = \int_\gamma 1_{\gamma_1(\xi_i)}(x)G_i(d\xi_i) \qquad (10)$$

wherein

- E refers to the expectation of the following stochastic argument;
- $1_{\gamma_1(\xi_1)}(x)$ is the indicator function, which is true for the argument x when x is in $\gamma_1(\xi_i)$, i.e. $1_{\gamma_1(\xi_1)}(x) = 1$ if the position x is in the set $\gamma_1(\xi_i)$.

Analogue, the probability that a position x of the human at time i is in the safe space $K_i'$ is given by

$$p_{K_i'}(x) = E[1_{\gamma_2(\xi_i)}(x)] = \int_\gamma 1_{\gamma_2(\xi_i)}(x)G_i(d\xi_i) \qquad (20)$$

and owed to the definition of the safe space and the subspace:

$$p_{K_i \backslash K_i}(x) = p_{K_i'}(x) - p_{K_i}(x)$$

wherein

- E refers to the expectation that the following stochastic argument;
- $1_{\gamma_2(\xi_1)}(x)$ is the indicator function, which is true for the argument x when x is in $\gamma_2(\xi_i)$, i.e. $1_{\gamma_2(\xi_1)}(x) = 1$ if the position x is in the set $\gamma_2(\xi_i)$.

This is now the step where the probabilistic model of the human and its movements interacts with probabilistic model of the hazard and its propagation. Therefore, the two set-valued maps $\gamma_1(\xi_i)$ and $\gamma_2(\xi_i)$ have yet to be defined:

$$\gamma_1(\xi) := \{x \in X | \Gamma(x) = 1\}$$

$$\gamma_2(\xi) := \{x = (h_x, h_y) \in X | [\xi]_{h_x,h_y} = 0 \vee \Gamma(x) = 1\}$$

for all $\xi \in Y'$, and v being the logical OR. This means that the set-valued map $\gamma_1$ is constant $\gamma_1(\xi) = \overline{\gamma}_1$ for all $\xi \in Y'$ in view of the hazard $\xi$ not contaminating exit space $\Gamma$. $\gamma_1$ represents the set of positions x outside of the building while $\gamma_2$ represents the set of non-contaminated positions x.

While in equations (10) and (20) the integral terms denote a determination of the covering functions in the continuous state space, the following equations provide a determination of the covering functions - which are expectations of certain events - in the discrete state space, wherein in the second function $p_{K_i}(x)$ already is subtracted for providing the expectation for the safeness of a position x within the building only:

$$p_{K_i}(x) = E[1_{\gamma_1(\xi_i)}(x)] = \qquad p_{\gamma_1(\xi_k)}(x) = \sum_{\xi_k \in \mathcal{Y}} 1_{\gamma_1(\xi_k)}(x)\hat{G}_k(\xi_k) = 1_{\bar{\gamma}_1}(x)$$

$$p_{K_i'\backslash K_i}(x) = p_{K_i'}(x) - p_{K_i}(x) = E[1_{\gamma_2(\xi_i)}(x)] - E[1_{\gamma_1(\xi_i)}(x)] =$$

$$p_{\gamma_2(\xi_k)\backslash\gamma_1(\xi_k)}(x) = \sum_{\xi_k \in \mathcal{Y}} 1_{\gamma_2(\xi_k)}(x)\hat{G}_k(\xi_k) - 1_{\bar{\gamma}_1}(x)$$

wherein the assumtions are taken, that

- the spaces Ki and $\gamma_1$, match;
- the spaces $K_i$' and $\gamma_2$, match;

As a result, the first covering function determines the expectation of a position x for the human at a given point in time k being in the target space which is a constant and finally independent from the hazard contamination given that the target space per definition is excluded from a contamination by the hazard.

As a result, the second function determines the expectation for a position x inside the building at a given point in time k NOT being contaminated and as such safe for the human by adding over the entire space $\mathcal{Y}$ transition probabilities of the hazard spilling over from different cells into the cell represented by the position x. It is implied that the position x is not yet contaminated.

In a preferred embodiment, and applied in the above functions, the transition probability $G_k(\xi_k' \mid \xi)$ is approximated by $\hat{G}_k(\xi_k)$: The paramterised set-valued process of the hazard is approximated by a time-indexed independent distribution of stochastic parameters according to

$$\prod_{k=0}^{N} G_k(\xi_k \mid \xi_{k-1}) \approx \prod_{k=0}^{N} \hat{G}_k(\xi_k)$$

where each stochastic kernel $\hat{G}k(\xi_k)$ is taken at the marginal of the product measure, i.e.

$$\hat{G}_k(\xi_k) := \sum_{\xi_{k-1} \in \mathcal{Y}} \sum_{\xi_{k-2} \in \mathcal{Y}} \cdots \sum_{\xi_1 \in \mathcal{Y}} \prod_{j=0}^{k} G_j(\xi_j \mid \xi_{j-1}),$$

$\xi_k$ E $\gamma$, with

$$G_0(\xi' \mid \xi) = \hat{G}_0(\xi') := \begin{cases} 1, & \text{if } \xi' = \xi_0 \\ 0, & \text{if } \xi' \neq \xi_0, \end{cases}$$

and $\xi_0 \in \mathcal{Y}$ is considered to be given.

The stochastic reachability problem is preferably solved via dynamic programming considering the probabilistic models defined for the hazard and the human. With the finite state space X the maximal reach-avoid policy $\mu^* = (\mu_1^*, \mu_2^*, \mu_{N-1}^*)$ with the backwards recursion introduced above is

$$V_k^*(x) = \max_{a \in \mathcal{A}} \left\{ p_{K_k}(x) + p_{K_k' \backslash K_k}(x) H(x, a, V_{k+1}^*) \right\},$$

$$\mu_k^*(x) \in \arg\max_{a \in \mathcal{A}} \left\{ p_{K_k}(x) + p_{K_k' \backslash K_k}(x) H(x, a, V_{k+1}^*) \right\}$$

with a discrete version of the markov chain H being

$$H(x, a, Z) = \sum_{y \in X} Z(y) Q(y|x, a)$$

initialised with $V_N^*(x) = p_{K_N}(x)$ for all $x \in X$. The maximal reach-avoid probability is then

$$r_{(x_0, \xi_0)}^{\mu^*} = \max_{\mu \in M_m} r_{(x_0, \xi_0)}^{\mu} = V_0^*(x_0)$$

for all $x \in X$, $\xi \in \mathcal{Y}$. The dynamic program produces an optimal policy and also the optimal value function which represents the probability of a successful escape. This information can quantify how dangerous investigated building evacuation scenarios are.

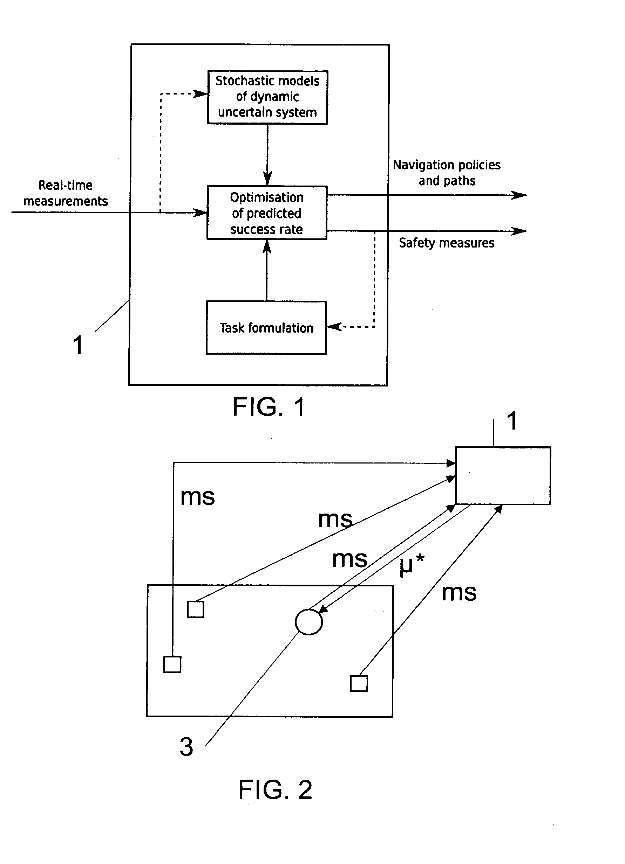

Figure 1 illustrates a block diagram of a computer system 1 according to an embodiment of the present invention. The computer system 1 comprises an engine configured to optimize predicted success rates of routes in an emergency scenario. One of the external inputs to the computer system may be real-time measurements from the emergency site which may include measurements that allow for detecting a human, and preferably a motion of the human, and / or measurements that allow for detecting a hazard, and preferably the propagation of the hazard. The task may be formulated in advance and may be stored in the computer system, and / or may be modified on-the-fly, i.e. while the computer system is in operation. Stochastic models of the dynamic uncertain elements such as the human and the hazard may be generated and maintained during operation. The computer system may output a navigation policy, e.g. in the form of instructions to one or more humans on the emergency site, and possibly safety measures as to success rates of the navigation policy which on the other hand may possibly be lead to a modification of the task.

Figure 2 illustrates a block diagram of a system according to an embodiment of the present invention, comprising a computer system, such as explained for instance with respect to Figure 1, and a couple of sensors 2 on an emergency site E which sensors 2 represent sensors that may measure or allow to derive the position of a hazard and / or a human on the emergency site E and transmit these measurements ms to the computer system, that preferably is remote from the emergency site. An output device 3 assumed to be worn by a human present on the emergency site is considered to be the recipient from instructions $\mu^*$ from the computer system 1. At the same time, the output device, which may be a smart phone, for example, may provide a detector for a hazard, e.g. inform of a temperature sensor which may provide at least some measurement ms about the position of a fire hazard nearby the human.

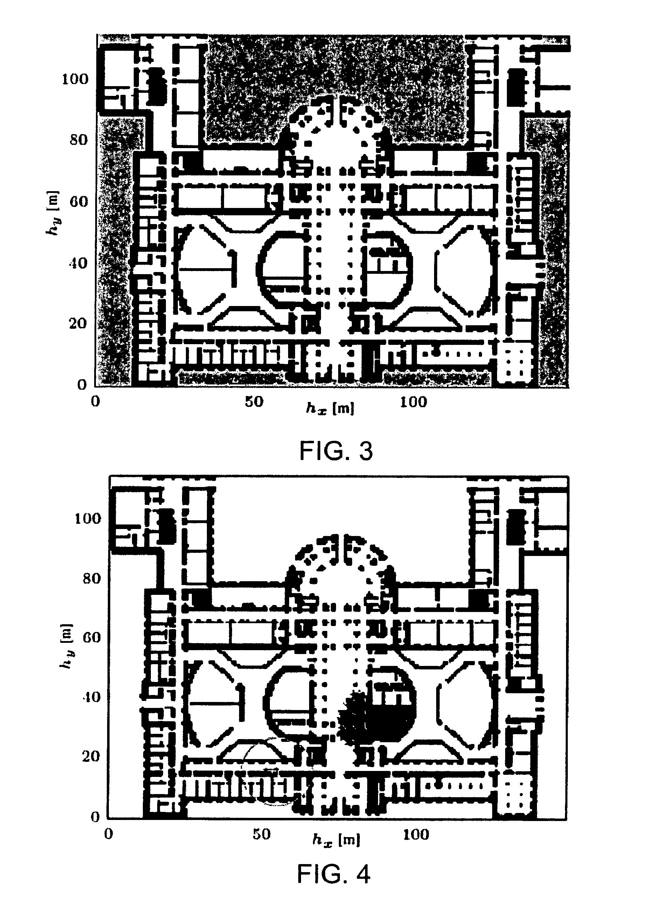

Figure 3 illustrates a sample building map $\Pi$ and a sample exit map $\Gamma$ as may be used in an embodiment of the present invention. The building map n illustrates free cells within the building in white and obstacles in black. The exit map $\Gamma$ illustrates the target space in grey. The grid parameters applied to all maps / spaces in this example are set to m = 219 and n = 170 such that the grid includes 219 x 170 cells. $\Delta H = 0.6825m$, for example, and $H_{x,1} = H_{y,1} = 0m$. With model parameters set to $p_h = 0.07$, $p_{free} = 0.2$, $p_{obstacle} = 0.0002$, i.e. $p_0$ and $p_1$ in the previous embodiments, and a sampling time Ts=0.4s, the time horizon is set to be N = 150 such that the time horizon in seconds is $NT_s$ = 60s. The time horizon may be dimensioned such that the target space may be reached from every position in the building if there is no obstruction by fire.

The selected parameters correspond to a expected speed of 6 km/h for the human moving freely. This may be a realistic human walking speed. However real human behaviour may be more complex and may involve e.g. reaction delays. The hazard propagation is modelled to be relatively fast and could well capture the behaviour of smoke or fire.

In the building map $\Pi$ of Figure 4 corresponding to the one of Figure 3, a sample emergency scenario is depicted. The initial human position is $x_0$=(64.155m, 13.650m), i.e. the dot encircled. The initial fire conditon $\xi$ is illustrated by the shaded area.

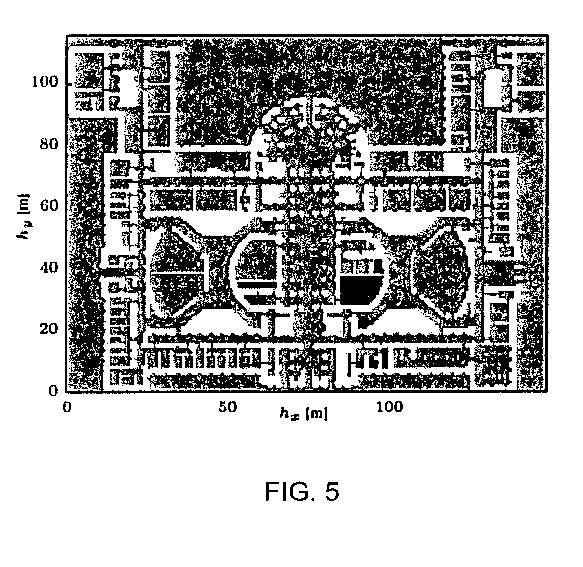

Figure 5 shows in the same building map $\Pi$ the resulting optimal value function $V_0^*(x)$ for the initial fire condition given in Figure 4. For most positions safe escape is very probable when the maximal reach-avoid policy $\mu^*$ is applied, i.e. light shaded areas. However, there are some positions for which the predicted probability of safely reaching an exit is low even though they are not immediately close to the fire, i.e. dark shaded areas. For such positions this scenario should be considered dangerous as the predicted evolution will endanger the human even if the optimal policy is applied.

**Claims**

1.  A method for determining instructions for navigating a human in an emergency, comprising
    detecting an initial position of the human, detecting an initial position of a hazard causing the emergency,
    maintaining a probabilistic model for a propagation of the hazard,
    maintaining a probabilistic model for a motion of the human,
    determining instructions for the human to move from the present position to a target space assumed to be safe for the human in view of the hazard dependent on at least the initial position of the hazard, the initial position of the human, the probabilistic model for the hazard, the probabilistic model for the human, and the target space, and transmitting the instructions to the human.

2.  Method according to claim 1,
    wherein a present position of the hazard is detected,
    wherein the probabilistic model for the hazard is adapted dependent on the detected present position of the hazard.

3.  Method according to claim 1 or claim 2,
    wherein a present position of the human is detected,
    wherein the probabilistic model for the human is adapted dependent on the detected present position of the human.

4.  Method of claim 2 in combination with claim 3,
    wherein the instructions are adapted dependent on the detected present position of the human and the detected present position of the hazard.

5.  Method according to any one of the preceding claims,
    wherein the probabilistic model for the human is dependent on information related to an environment of the hazard and the human.

6.  Method according to any one of the preceding claims,
    wherein a time interval is defined within which time interval the human is desired to be routed to the target space,
    wherein the instructions are determined according to a maximized probability that the target space is reached within the time interval while a probability for the human to be at a position where an obstacle or the hazard is present at that time for all times prior to having the target space reached is minimized.

7.  Method according to any one of the preceding claims, wherein
    the instructions are taken from a set of predefined instructions, the set including at least

    - staying at the present position;
    - moving in a first direction, preferably north;
    - moving in a second direction, preferably south;

- moving in a third direction, preferably east;
- moving in a fourth direction, preferably west.

**8.** Method according to any one of the preceding claims,
wherein the route is determined recursively based on combining for each point in time a previously calculated probability that no hazard was encountered so far with a probability that no hazard will be encountered at the next step in time.

**9.** Computer program product for determining instructions for navigating a human in an emergency, comprising computer program code means for executing the following steps when run on a processing unit of a computer system:

receiving an initial position of the human,
receiving an initial position of a hazard causing the emergency,
maintaining a probabilistic model for a propagation of the hazard,
maintaining a probabilistic model for a motion of the human,
determining instructions for the human to move from the present position to a target space assumed to be safe for the human in view of the hazard dependent on at least the initial position of the hazard, the initial position of the human, the probabilistic model for the hazard, the probabilistic model for the human, and the target space, and
transmitting the instructions to the human.

**10.** Computer system for determining instructions for navigating a human in an emergency, the computer system being configured to
receive an initial position of the human, receive an initial position of a hazard causing the emergency,
maintain a probabilistic model for a propagation of the hazard,
maintain a probabilistic model for a motion of the human,
determine instructions for the human to move from the present position to a target space assumed to be safe for the human in view of the hazard dependent on at least the initial position of the hazard, the initial position of the human, the probabilistic model for the hazard, the probabilistic model for the human, and the target space, and
initiate a transmission of the instructions to the human.

**11.** System for determining instructions for navigating a human in an emergency, comprising

- a computer system according to claim 9,
- one or more sensors for detecting a position of the human and providing the position to the computer system,
- one or more sensors for detecting a position of the hazard and for providing the position to the computer system, and
- one or more output devices for receiving the instructions transmitted by the computer system.

**12.** System according to claim 10,
wherein the output device comprises a portable electronic device for the human, which portable electronic device is one of:

• mobile phones,
• a wearable computer,
• intelligent glasses.

FIG. 1

FIG. 2

FIG. 3

FIG. 4

FIG. 5

Europäisches
Patentamt

European
Patent Office

Office européen
des brevets

**EUROPEAN SEARCH REPORT**

Application Number

EP 13 00 5725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/276517 A1 (BANASZUK ANDRZEJ [US] ET AL) 1 November 2012 (2012-11-01) * paragraphs [0019], [0021] - [0022], [0028], [0029], [0084], [0090], [0091], [0030], [0034], [0025], [0026], [0062], [0056], [0033], [0035], [0005]; figure 1 * * paragraph [0038] * ----- | 1-12 | INV. G01C21/20 G06N7/00 G01C21/34 H04W4/22 G01C21/00 |
| A | MASSINK M ET AL: "A Scalable Fluid Flow Process Algebraic Approach to Emergency Egress Analysis", SOFTWARE ENGINEERING AND FORMAL METHODS (SEFM), 2010 8TH IEEE INTERNATIONAL CONFERENCE ON, IEEE, PISCATAWAY, NJ, USA, 13 September 2010 (2010-09-13), pages 169-180, XP031803064, ISBN: 978-1-4244-8289-4 * the whole document * ----- | 1-12 | |
| | | | TECHNICAL FIELDS SEARCHED (IPC) |
| | | | G01C G06N G08B H04W |

The present search report has been drawn up for all claims

| Place of search | Date of completion of the search | Examiner |
|---|---|---|
| The Hague | 9 May 2014 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 00 5725

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2014

| Patent document cited in search report | Publication date | Patent family member(s) | Publication date |
|---|---|---|---|
| US 2012276517 A1 | 01-11-2012 | CA 2700037 A1<br>CN 101868798 A<br>US 2012276517 A1<br>WO 2009038563 A1 | 26-03-2009<br>20-10-2010<br>01-11-2012<br>26-03-2009 |

EPO FORM P0459

For more details about this annex : see Official Journal of the European Patent Office, No. 12/82